# EUROPEAN PATENT APPLICATION

(11) **EP 4 517 504 A1**
(43) Date of publication of application: **05.03.2025**
(21) Application number: 23854256.7
(22) Date of filing: 03.08.2023
(51) Int. Cl.: G06F 3/04886

(54) **SPLIT-SCREEN DISPLAY METHOD AND RELATED APPARATUS**

(30) Priority: 19.08.2022 CN 202211001623
(71) Applicant: Huawei Technologies Co., Ltd., Shenzhen, Guangdong 518129 (CN)
(72) Inventor: LI, Wei, Shenzhen, Guangdong 518129 (CN); ZHANG, Yanan, Shenzhen, Guangdong 518129 (CN)
(74) Representative: Goddar, Heinz J.
(86) International application number: PCT/CN2023/111080
(87) International publication number: WO 2024/037352

(57) **Abstract**

A split-screen display method and a related apparatus are provided. The method includes: displaying a plurality of applications on an interface based on a first display direction and a first split-screen layout, where the first split-screen layout indicates a location relationship between the plurality of applications on the interface, and the plurality of applications include a first application; and displaying, in response to a first operation, the plurality of applications on the interface based on a second display direction and a second split-screen layout, and displaying in full screen a target object of the first application in a split-screen area occupied by the first application, where the second split-screen layout indicates a location relationship between the plurality of applications on the interface. In this way, the electronic device fully displays the target object of the first application in a current split-screen layout, to help improve user experience.

## Description

This application claims priority to Chinese Patent Application No. 202211001623.1, filed with the China National Intellectual Property Administration on August 19, 2022 and entitled "SPLIT-SCREEN DISPLAY METHOD AND RELATED APPARATUS", which is incorporated herein by reference in its entirety.

### TECHNICAL FIELD

This application relates to the field of terminals, and in particular, to a split-screen display method and a related apparatus.

### BACKGROUND

With development of smart devices, more devices support screen splitting to meet a requirement of a user for simultaneously processing a plurality of applications. Different devices may support different quantities of split screens and split-screen layouts. For example, most devices support two split screens (for example, top and bottom split screens or left and right split screens), and some devices support three split screens, four split screens, or the like. However, there may be a problem that key content of an application cannot be fully displayed in a split-screen area in which the application is located, resulting in poor user experience.

Therefore, a split-screen display method is expected to be provided, to fully display the key content of the application, thereby improving user experience.

### SUMMARY

This application provides a split-screen display method and a related apparatus, to fully display key content of an application, thereby improving user experience.

According to a first aspect, this application provides a split-screen display method. The method may be performed by an electronic device, or may be performed by a component (for example, a chip or a chip system) configured in an electronic device, or may be implemented by a logical module or software that can implement all or some functions of an electronic device. This is not limited in this application.

For example, the method includes: displaying a plurality of applications on an interface based on a first display direction and a first split-screen layout, where the first split-screen layout indicates a location relationship between the plurality of applications on the interface, and the plurality of applications include a first application; and displaying, in response to a first operation, the plurality of applications on the interface based on a second display direction and a second split-screen layout, and displaying in full screen a target object of the first application in a split-screen area occupied by the first application, where the target object is an object that is in a plurality of objects of the first application and that supports full-screen display, and the second split-screen layout indicates a location relationship between the plurality of applications on the interface.

Based on the foregoing technical solution, the first application in the plurality of applications that are in a split-screen state needs to switch from the first display direction to the second display direction. In response to the first operation, during switch to the second display direction, a split-screen layout is also switched from the first split-screen layout to the second split-screen layout. In addition, the target object of the first application is displayed in full screen in the split-screen area occupied by the first application, so that the electronic device fully displays the target object of the first application in a current split-screen layout. This helps improve user experience.

Optionally, the first application is a video playing application, and the target object is a video playing interface of the video playing application.

With reference to the first aspect, in some possible implementations of the first aspect, the method further includes: determining whether all the plurality of applications support the second display direction; and the displaying, in response to a first operation, the plurality of applications on the interface based on a second display direction and a second split-screen layout, and displaying in full screen a target object of the first application in a split-screen area occupied by the first application includes: when all the plurality of applications support the second display direction, displaying, in response to the first operation, the plurality of applications on the interface based on the second display direction and the second split-screen layout, and displaying in full screen the target object of the first application in the split-screen area occupied by the first application; or
when a second application in the plurality of applications does not support the second display direction, informing, by using the interface, a user that the second application does not support the second display direction.

With reference to the first aspect, in some possible implementations of the first aspect, the first operation includes any one of the following: an operation of tapping a landscape/portrait-orientated display switching control, an operation of tapping a split-screen layout switching control, a voice operation, or an operation of rotating the electronic device.

There are various first operations. In a possible design, in response to a touch control operation of the user (for example, an operation of tapping the landscape/portrait-orientated display switching control by the user), the first application needs to switch from the first display direction to the second display direction. In another possible design, in response to a voice operation of the user (for example, the user switches a display direction of the first application through a voice prompt), the first application needs to switch from the first display direction to the second display direction. In still another possible design, in response to an operation of rotating the electronic device by the user (for example, the user rotates the electronic device by 90 degrees), the first application needs to switch from the first display direction to the second display direction. The foregoing various triggering manners are provided, which helps improve flexibility of switching the display direction of the first application. In still another possible design, in response to an operation of tapping the split-screen layout switching control by the user, when switching the split-screen layout, the electronic device may also switch the display direction. In other words, the first application needs to switch from the first display direction to the second display direction.

With reference to the first aspect, in some possible implementations of the first aspect, the first display direction is portrait-orientated display, and the first split-screen layout indicates that the plurality of applications are distributed on the interface in a left-right manner; and the second display direction is landscape-orientated display, and the second split-screen layout indicates that the plurality of applications are distributed on the interface in a top-bottom manner.

The first application needs to switch from portrait-orientated display to landscape-orientated display. In response to the first operation, for example, the operation of tapping the landscape/portrait-orientated display switching control, the operation of tapping the split-screen layout switching control, the voice operation, or the operation of rotating the electronic device, the electronic device displays the plurality of applications on the interface in a manner of landscape-orientated display and top-bottom screen splitting. In this way, application content of the plurality of applications can be fully displayed in split-screen areas in which the plurality of applications are located, thereby improving user experience.

With reference to the first aspect, in some possible implementations of the first aspect, the first display direction is portrait-orientated display, and the first split-screen layout indicates that the plurality of applications are distributed on the interface in a left-right manner; and the second display direction is landscape-orientated display, and the second split-screen layout indicates that the plurality of applications are distributed on the interface in a top-bottom manner.

With reference to the first aspect, in some possible implementations of the first aspect, the second split-screen layout further indicates a ratio between the plurality of applications on the interface, and the method further includes: determining, based on application information of the first application, the ratio between the plurality of applications on the interface.

The electronic device may determine, based on at least current application information of the first application, an appropriate ratio between the plurality of applications on the interface, and further display the plurality of applications on the interface based on the ratio. This helps improve user experience.

According to a second aspect, this application provides a split-screen display method. The method may be performed by an electronic device, or may be performed by a component (for example, a chip or a chip system) configured in an electronic device, or may be implemented by a logical module or software that can implement all or some functions of an electronic device. This is not limited in this application.

For example, the method includes: displaying a first application in full screen on an interface; and displaying, in response to a screen splitting operation of a user, the first application and a second application on the interface based on a first display direction and a first split-screen layout, and displaying in full screen a target object of the first application in a split-screen area occupied by the first application, where the target object is an object that is in a plurality of objects of the first application and that supports full-screen display, and the first split-screen layout indicates a location relationship between the first application and the second application on the interface.

Based on the foregoing technical solution, the electronic device may automatically determine a split-screen layout based on a display direction suitable for the first application. For example, the video playing application is more suitable for video playing in landscape orientation. Therefore, when screen splitting is triggered, the electronic device may trigger top-bottom screen splitting by default. In other words, when the electronic device displays the first application in full screen on the interface, once screen splitting is triggered, the electronic device displays the first application and the second application in the first display direction and the first split-screen layout, and displays in full screen the target object of the first application in the split-screen area occupied by the first application. In this way, the target object of the first application is fully displayed to improve user experience.

Optionally, the first application is a video playing application, and the target object is a video playing interface of the video playing application.

With reference to the second aspect, in some possible implementations of the second aspect, the method further includes: determining whether both the first application and the second application support the first display direction; and the displaying, in response to a screen splitting operation of a user, the first application and a second application on the interface based on a first display direction and a first split-screen layout, and displaying in full screen a target object of the first application in a split-screen area occupied by the first application includes: when both the first application and the second application support the first display direction, displaying, in response to the screen splitting operation of the user, the first application and the second application on the interface based on the first display direction and the first split-screen layout, and displaying in full screen the target object of the first application in the split-screen area occupied by the first application.

With reference to the second aspect, in some possible implementations of the second aspect, the first display direction is landscape-orientated display, and the first split-screen layout indicates that the first application and the second application are distributed on the interface in a top-bottom manner.

With reference to the second aspect, in some possible implementations of the second aspect, the first display direction is portrait-orientated display, and the first split-screen layout indicates that the first application and the second application are distributed on the interface in a left-right manner.

With reference to the second aspect, in some possible implementations of the second aspect, the first split-screen layout further indicates a ratio between the first application and the second application on the interface, and the method further includes: determining, based on application information of the first application and/or application information of the second application, the ratio between the first application and the second application on the interface.

The electronic device may determine an appropriate ratio between the first application and the second application on the interface based on the application information of the first application and/or the application information of the second application on current split screens, and further display the applications on the interface based on the ratio. This helps improve user experience.

According to a third aspect, this application provides an electronic device, to implement the method according to any one of the first aspect and the possible implementations of the first aspect, or implement the method according to any one of the second aspect and the possible implementations of the second aspect. The apparatus includes a corresponding unit configured to perform the foregoing methods. The unit included in the apparatus may be implemented by software and/or hardware.

According to a fourth aspect, this application provides an electronic device. The apparatus includes a processor. The processor is coupled to a memory, and may be configured to execute a computer program in the memory, to implement the method according to any one of the first aspect and the possible implementations of the first aspect, or implement the method according to any one of the second aspect and the possible implementations of the second aspect.

Optionally, the apparatus further includes the memory.

Optionally, the apparatus further includes a communication interface, and the processor is coupled to the communication interface.

According to a fifth aspect, this application provides a computer-readable storage medium. The computer-readable storage medium stores a computer program or instructions, and when the computer program or the instructions are executed, the method according to any one of the first aspect and the possible implementations of the first aspect is implemented, or the method according to any one of the second aspect and the possible implementations of the second aspect is implemented.

According to a sixth aspect, this application provides a computer program product. The computer program product includes instructions, and when the instructions are run, the method according to any one of the first aspect and the possible implementations of the first aspect is implemented, or the method according to any one of the second aspect and the possible implementations of the second aspect is implemented.

According to a seventh aspect, this application provides a chip system. The chip system includes at least one processor, configured to support implementation of a function according to any one of the first aspect and the possible implementations of the first aspect, or according to any one of the second aspect and the possible implementations of the second aspect, for example, receiving or processing data or the like in the foregoing methods.

In a possible design, the chip system further includes a memory. The memory is configured to store program instructions and data, and the memory is located inside or outside the processor.

The chip system may include a chip, or may include a chip and another discrete component.

It should be understood that technical solutions of the third to the seventh aspects of this application are consistent with technical solutions of the first aspect and the second aspect of this application, and advantageous effects achieved by the aspects and the corresponding feasible implementations are similar. Details are not described again.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3(a) and FIG. 3(b) show a known split-screen display method according to an embodiment of this application;
FIG. 4(a) and FIG. 4(b) show another known split-screen display method according to an embodiment of this application;
FIG. 5 is a schematic flowchart of a split-screen display method according to an embodiment of this application;
FIG. 6 is a detailed flowchart of a split-screen display method according to an embodiment of this application;
FIG. 7(a) and FIG. 7(b) are a diagram of a method for triggering an electronic device to switch a display direction according to an embodiment of this application;
FIG. 8(a) and FIG. 8(b) are a diagram of another method for triggering an electronic device to switch a display direction according to an embodiment of this application;
FIG. 9(a) and FIG. 9(b) are a diagram of adjusting a ratio between applications on an interface according to an embodiment of this application;
FIG. 10(a) and FIG. 10(b) are a diagram of switching a display direction of an electronic device according to an embodiment of this application;
FIG. 11 is a schematic flowchart of internal interaction of an electronic device according to an embodiment of this application;
FIG. 12 is a schematic flowchart of another split-screen display method according to an embodiment of this application;
FIG. 13 is a detailed flowchart of another split-screen display method according to an embodiment of this application; and
FIG. 14 is a diagram of a method for triggering screen splitting of an electronic device according to an embodiment of this application.

### DESCRIPTION OF EMBODIMENTS

The following describes technical solutions of this application with reference to accompanying drawings.

The method provided in embodiments of this application may be applied to an electronic device, for example, a foldable smartphone, a tablet computer, or a bar-type mobile phone. A specific type of the electronic device is not limited in embodiments of this application.

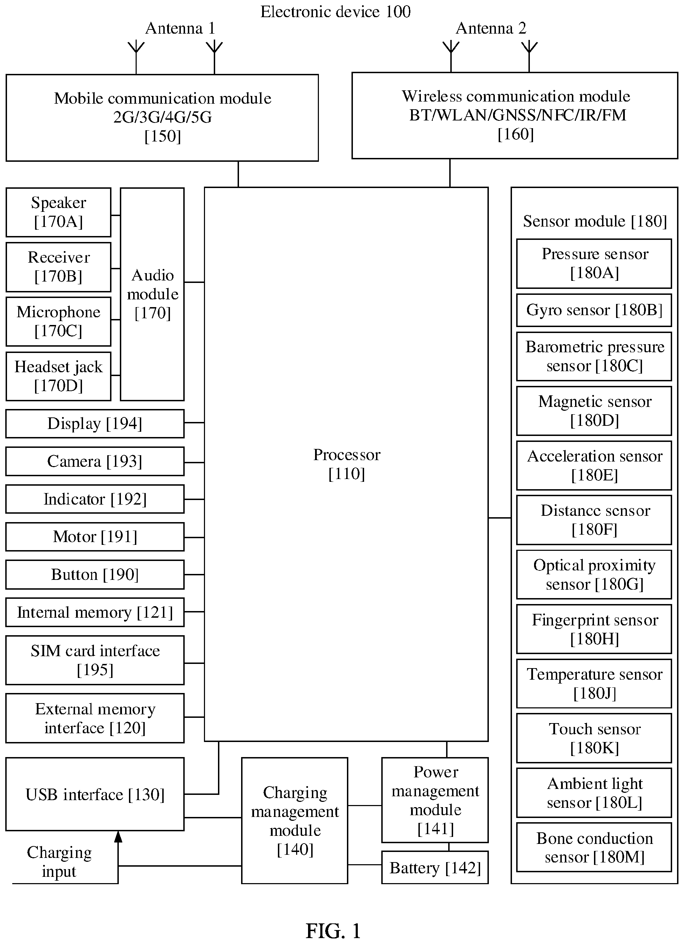

For example, FIG. 1 is a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The gyro sensor 180B may be configured to determine a moving posture of the electronic device 100. In some embodiments, an angular velocity of the electronic device 100 around three axes (namely, axes x, y, and z) may be determined by using the gyro sensor 180B. The gyro sensor 180B may be configured to implement image stabilization during photographing. For example, when a shutter is pressed, the gyro sensor 180B detects an angle at which the electronic device 100 jitters, calculates, based on an angle, a distance for which a lens module needs to compensate, and allows the lens to cancel the jitter of the electronic device 100 through reverse motion, to implement image stabilization. The gyro sensor 180B may further be configured in a navigation scenario or a somatic game scenario.

The acceleration sensor 180E may detect accelerations of the electronic device 100 in various directions (usually on three axes). When the electronic device 100 is still, a magnitude and a direction of gravity may be detected.

The acceleration sensor 180E may further be configured to recognize a posture of the electronic device, and is used in an application, for example, landscape-portrait switching or a pedometer.

The touch sensor 180K may also be referred to as a "touch panel". The touch sensor 180K may be disposed on the display 194, and the touch sensor 180K and the display 194 constitute a touchscreen, which is also referred to as a "touch screen". During specific implementation, the touch sensor 180K is configured to detect a touch operation performed on or near the touch sensor. The touch sensor may transfer the detected touch operation to an application processor to determine a type of the touch event. The touch sensor 180K may further provide a visual output related to the touch operation through the display 194.

In embodiments of this application, the sensor module 180 may be configured to listen to a physical rotation event, to determine whether physical rotation occurs in the electronic device 100. In addition, a type of the sensor is not limited in embodiments of this application. For example, the sensor module 180 may further include a gravity sensor, and the gravity sensor is configured to calculate a screen direction. A numerical unit of the gravity sensor is usually measured when a gravitational acceleration g=9.8 meters/second squared (m/s²).

The processor 110 may include one or more processing units. For example, the processor 110 may include one or more of an application processor (application processor, AP), a microcontroller unit (microcontroller unit, MCU), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be independent components, or may be integrated into one or more processors.

The application processor outputs a sound signal through the audio module 170 (for example, the speaker 170A), or displays an image or a video on the display 194.

The controller may be a nerve center and a command center of the electronic device 100. The controller may generate an operation control signal based on an instruction operation code and a time sequence signal, to complete control of instruction fetching and instruction execution.

A memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

The processor 110 may perform different operations by executing the instructions, to implement different functions. For example, the instructions may be instructions pre-stored in the memory before the device is delivered from a factory, or may be instructions read from a new application (application, APP) after a user installs the app in a use process. This is not limited in embodiments of this application.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a secure digital input and output (secure digital input and output, SDIO) interface, a pulse code modulation (pulse code modulation, PCM) interface, a universal asynchronous receiver/transmitter (universal asynchronous receiver/transmitter, UART) interface, a universal synchronous/asynchronous receiver/ transmitter (universal synchronous/asynchronous receiver/ transmitter, USART), a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, an infrared (infrared, IR) technology, and the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code-division multiple access (code division multiple access, CDMA), wideband code-division multiple access (wideband code-division multiple access, WCDMA), time-division code-division multiple access (time-division code-division multiple access, TD-SCDMA), long term evolution (long term evolution, LTE), a 5G communication system, BT, a GNSS, a WLAN, NFC, FM, an IR technology, and/or the like. The GNSS may include a global satellite positioning system (global positioning system, GPS), a GNSS, a BeiDou navigation satellite system (BeiDou navigation satellite system, BDS), a quasi-zenith satellite system (quasi-zenith satellite system, QZSS), and/or satellite-based augmentation systems (satellite-based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The electronic device 100 may include one or more displays 194.

In embodiments of this application, the display 194 may be configured to simultaneously display two or more applications. In other words, the electronic device 100 may support a split-screen mode, so that the user can simultaneously use a plurality of applications.

The electronic device 100 may implement a photographing function by using the ISP, the camera 193, the video codec, the GPU, the display 194, the application processor, and the like.

The ISP is configured to process data fed back by the camera 193. For example, during photographing, the shutter is pressed, and light is transmitted to a photosensitive element of the camera through a lens. An optical signal is converted into an electrical signal, and a photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format, for example, RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats such as moving picture experts group (moving picture experts group, MPEG)-1, MPEG-2, MPEG-3, and MPEG-4.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or a phone book) and the like created when the electronic device 100 is used. In addition, the internal memory 121 may include a high-speed random-access memory, or may include a nonvolatile memory, for example, at least one magnetic disk storage device, a flash memory, or a universal flash storage (universal flash storage, UFS).

The electronic device 100 may implement an audio function by using the audio module 170, the speaker 170A, the receiver 170B, the microphone 170C, the headset jack 170D, the application processor, and the like, for example, music playing and sound recording.

The audio module 170 is configured to convert digital audio information into an analog audio signal for output, and is also configured to convert analog audio input into a digital audio signal. The audio module 170 may further be configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 190 includes a power button (or referred to as a power-on button), a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or more SIM card interfaces. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

It should be understood that the structure shown in this application does not constitute a specific limitation on the electronic device 100. In some other embodiments, the electronic device 100 may include more or fewer components than those shown in the figure, or combine some components, or split some components, or have a different component arrangement. The components shown in the figure may be implemented by hardware, software, or a combination of software and hardware.

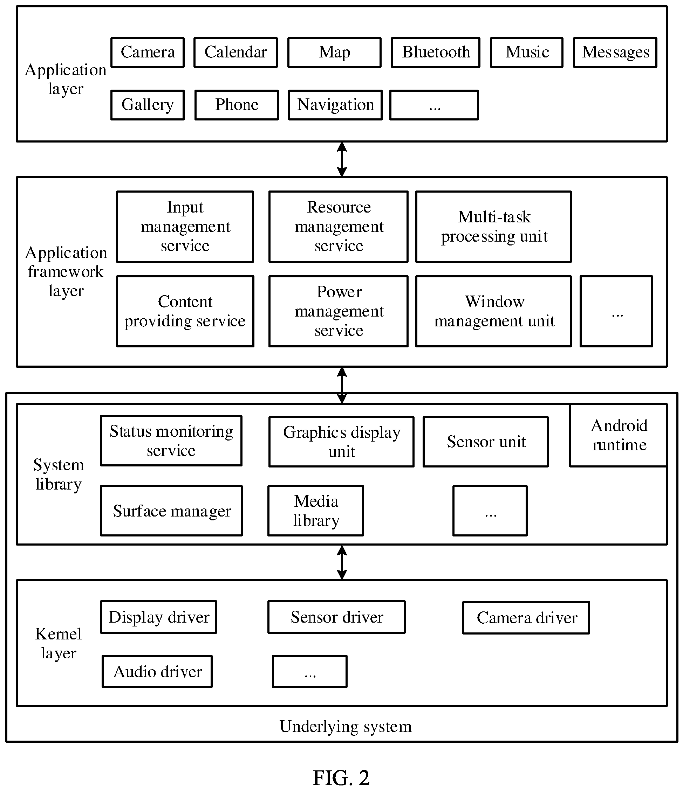

FIG. 2 is a diagram of a software structure of an electronic device according to an embodiment of this application.

As shown in FIG. 2, software is divided into several layers by using a layered architecture, and each layer has a clear role and task. The layers communicate with each other through a software interface. In some embodiments, an Android system is divided into an application layer, an application framework layer, Android runtime (Android runtime), a system library, and a kernel layer from top to bottom.

The application layer may include a series of application packages. As shown in FIG. 2, an application may include a system application and a third-party application. In embodiments of this application, the system application may further include, for example, Camera, Gallery, Calendar, Phone, and Messages. The third-party application may include, for example, a video playing application and WeChat.

The application framework layer provides an application programming interface (application programming interface, API) and a programming framework for an application at the application layer. The application framework layer includes some predefined functions. As shown in FIG. 2, the application framework layer may include an input management service (input manager service, IMS), a power management service (power manager service, PMS), a resource management service, a content providing service, and the like. This is not limited in embodiments of this application.

In embodiments of this application, the application framework layer may further include a multi-task processing unit and a window management unit.

The multi-task processing unit may be used to listen to a landscape-orientated display request/full-screen display request from the window management unit, and may further be used to determine whether a plurality of applications in a split-screen state support landscape-orientated display/full-screen display, and in a case in which all the plurality of applications support landscape-orientated display/full-screen display, transfer a switching instruction to the window management unit. The switching instruction indicates to switch a split-screen layout.

The window management unit may be used to listen to a landscape-orientated display request/full-screen display request from an application or a sensor unit, and transfer the request to the multi-task processing unit, and may further be used to adjust the split-screen layout after receiving the switching instruction from the multi-task processing unit, for example, adjust a window size, a ratio between applications on an interface, a location of each application on the interface, and the like.

The Android runtime may include a kernel library and a virtual machine. The Android runtime is responsible for scheduling and management of the Android system.

The kernel library includes two parts: One part is a performance function that needs to be invoked by a Java language, and the other part is the kernel library of the Android system.

The application layer and the application framework layer run on the virtual machine. The virtual machine executes Java files of the application layer and the application framework layer as binary files. The virtual machine is used to implement functions such as object lifecycle management, stack management, thread management, security and exception management, and garbage collection.

The system library may include a plurality of functional modules, such as a status monitoring service, a surface manager (surface manager), media library (media library), a three-dimensional graphics processing library (for example, OpenGL ES), and a two-dimensional (2 dimensions, 2D) graphics engine (for example, SGL).

In embodiments of this application, as shown in FIG. 2, the system library may further include a graphics display unit and a sensor unit.

The graphics display unit may be used to draw a window, render an interface, and the like. The sensor unit may be used to monitor physical rotation time, and report the physical rotation time to the window management unit.

The kernel layer is a layer between hardware and software. The kernel layer includes at least a sensor service (which may also be referred to as a sensor driver), a display service (which may also be referred to as a display driver), a camera driver, an audio driver, and the like. This is not limited in embodiments of this application.

Still as shown in FIG. 2, the system library, the kernel layer, and the like below the application framework layer may be referred to as an underlying system. The underlying system includes an underlying display system used to provide the display service. For example, the underlying display system includes the display driver at the kernel layer and the surface manager in the system library.

When a user uses an electronic device, a side on which a display area of the electronic device is basically parallel to (or has a small included angle with) a horizontal direction may be referred to as a width of the display area, and a side on which the display area of the electronic device is basically parallel to (or has a small included angle with) a vertical direction may be referred to as a height of the display area. A display direction of an application running in the electronic device may include landscape-orientated display and portrait-orientated display. The width of the display area that is of a screen and that corresponds to landscape-orientated display (namely, the side on which the display area has a small included angle with the horizontal direction of the screen) is greater than the height of the display area (namely, the side on which the display area has a smaller included angle with the vertical direction of the screen). The width of the display area that is of the screen and that corresponds to portrait-orientated display is less than the height of the display area.

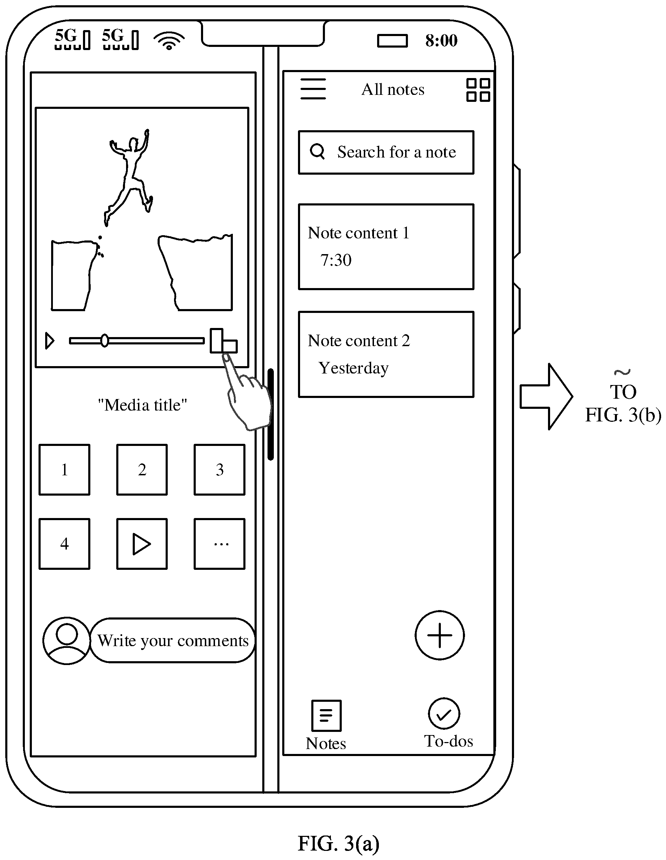

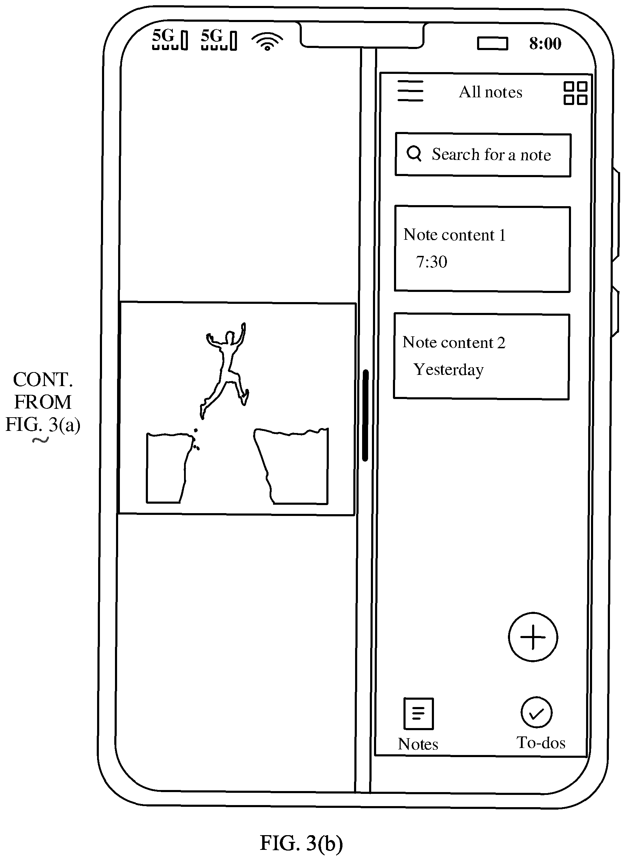

FIG. 3(a) and FIG. 3(b) are a diagram of a known split-screen display method according to an embodiment of this application. As shown in FIG. 3(a), an application 1 is a video playing application, and an application 2 is a notepad. The application 1 and the application 2 are displayed on an interface in a manner of left-right screen splitting and portrait-orientated display. As shown in FIG. 3(b), in response to an operation of tapping a landscape/portrait-orientated display switching control on a video playing interface of the application 1 by a user, the application 1 is displayed on the interface in the manner of portrait-orientated display, and the video playing interface of the application 1 is displayed in full screen in a split-screen area occupied by the application 1. When the video playing interface is displayed in full screen, a display area actually occupied by the video playing interface of the application 1 is small to adapt to a width of a short side of the split-screen area occupied by the application 1, and even content of the application 1 cannot be clearly seen, resulting in poor user experience.

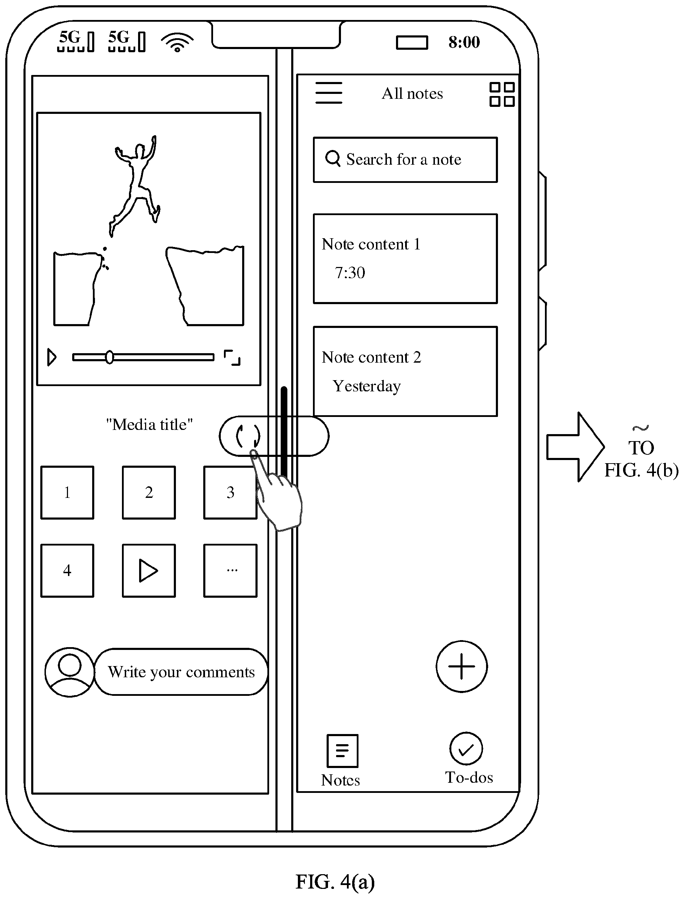

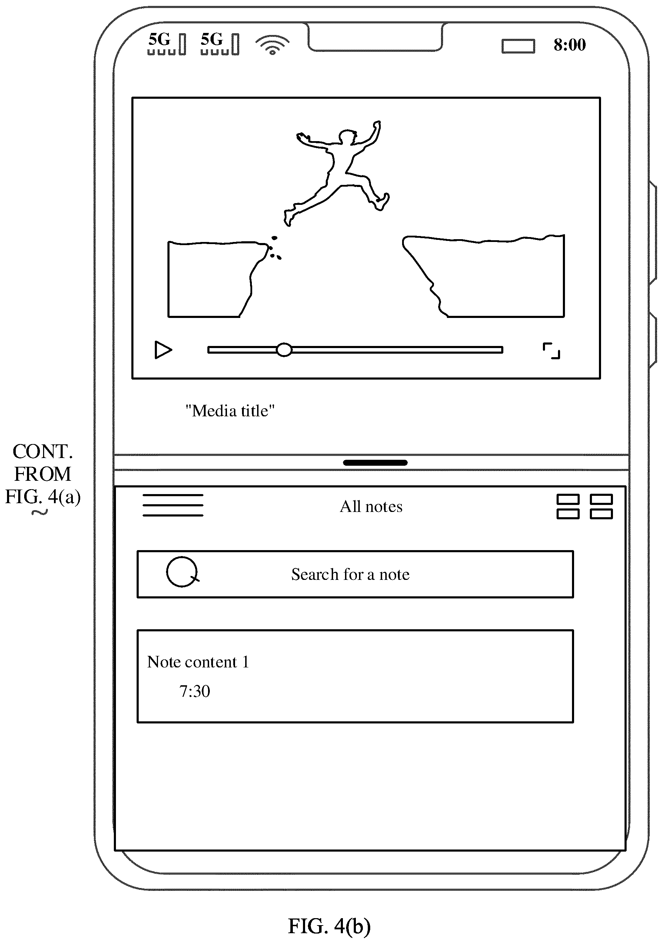

FIG. 4(a) and FIG. 4(b) are a diagram of another known split-screen display method according to an embodiment of this application. As shown in FIG. 4(a), an application 1 is a video playing application, and an application 2 is a notepad. The application 1 and the application 2 are displayed on an interface in a manner of left-right screen splitting. In addition, when the application 1 and the application 2 are on left and right split-screens, the application 1 and the application 2 are displayed in portrait orientation by default. A user may trigger adjustment of a split-screen layout by using an interactive control for split-screen layout switching. For example, as shown in FIG. 4(b), in response to an operation of tapping the split-screen layout switching control by the user, the application 1 and the application 2 are displayed on the interface in a manner of top-bottom screen splitting. After switching to top-bottom screen splitting, the application 1 is displayed in a split-screen area occupied by the application 1 in a manner of landscape-orientated display, but a video playing interface of the application 1 is not displayed in full screen in the split-screen area occupied by the application 1. As a result, the video playing interface of the application 1 still cannot fully occupy the split-screen area in which the application 1 is located. In other words, key content of the application still cannot be fully displayed, resulting in poor user experience.

The electronic device shown in FIG. 3(a) to FIG. 4(b) may be, for example, a foldable smartphone.

In conclusion, it can be learned that, at present, when a plurality of applications are in a split-screen state, there may be a problem that key content of the applications cannot be fully displayed on an interface, resulting in poor user experience.

In view of this, this application provides a method. When a first application in a plurality of applications that are in a split-screen state needs to switch from a first display direction to a second display direction, an electronic device switches to the second display direction, and also switches a split-screen layout to a second split-screen layout. A target object of the first application is displayed in full screen in a split-screen area occupied by the first application, so that the target object of the first application is fully displayed in a current split-screen layout. In other words, key content of the first application is fully displayed. This helps improve user experience.

To facilitate understanding of embodiments of this application, the following descriptions are first provided.

First, to clearly describe the technical solutions in embodiments of this application, the terms such as "first" and "second" are used in embodiments of this application to distinguish between same items or similar items that provide basically same functions. For example, a first display direction and a second display direction are merely intended to distinguish between different display directions, and do not limit a sequence thereof. A person skilled in the art may understand that the terms such as "first" and "second" do not limit a quantity or an execution sequence, and the terms such as "first" and "second" do not indicate a definite difference.

Second, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c. Herein, a, b, and c may be singular or plural.

The following describes in detail the split-screen display method provided in embodiments of this application with reference to the accompanying drawings.

It should be understood that the following embodiments describe the method from a perspective of an electronic device. The electronic device may be, for example, a foldable smartphone, a tablet, or a bar-type mobile phone.

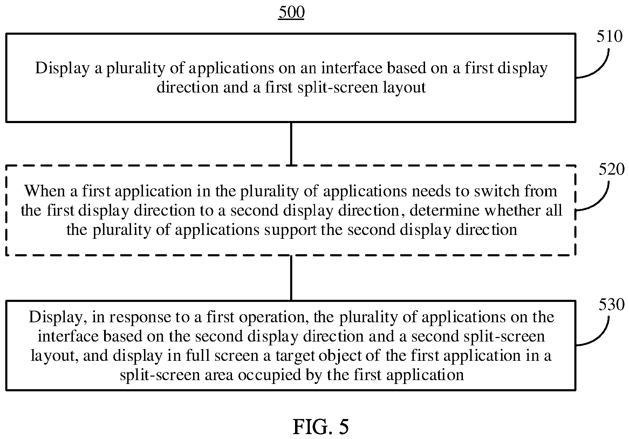

FIG. 5 is a schematic flowchart of a split-screen display method 500 according to an embodiment of this application. The method 500 shown in FIG. 5 may include steps 510 to 530. The following describes the steps in the method 500 in detail.

Step 510: Display a plurality of applications on an interface based on a first display direction and a first split-screen layout.

The plurality of applications include a first application. The first display direction may be, for example, landscape-orientated display or portrait-orientated display. The first split-screen layout indicates a location relationship between the plurality of applications on the interface. For example, the first split-screen layout indicates that the plurality of applications are distributed on the interface in a top-bottom manner, which may also be referred to as top-bottom screen splitting. For another example, the first split-screen layout indicates that the plurality of applications are distributed on the interface in a left-right manner, which may also be referred to as left-right screen splitting.

For example, a foldable smartphone is used as an example. The plurality of applications include an application 1 and an application 2. The application 1 and the application 2 are displayed on an interface of the foldable smartphone. The application 1 and the application 2 are displayed in a portrait-orientated style. In addition, the application 1 and the application 2 are distributed on the interface in a left-right manner. In other words, the application 1 and the application 2 are in a left-right split-screen state.

In addition, a quantity of split screens is not limited in this application. For example, when the first split-screen layout indicates that the plurality of applications are distributed on the interface in a top-bottom manner, there may be two split screens with the application 1 and the application 2 distributed on the interface in a top-bottom manner, or there may be three split screens with the application 1 on the top and the application 2 and an application 3 at the bottom. For another example, when the first split-screen layout indicates that the plurality of applications are distributed on the interface in a left-right manner, there may be two split screens with the application 1 and the application 2 distributed on the interface in a left-right manner, or there may be three split screens with the application 1 on the left and the application 2 and the application 3 on the right. For brevity, details are not listed herein one by one.

Step 520: When the first application in the plurality of applications needs to switch from the first display direction to a second display direction, determine whether all the plurality of applications support the second display direction.

An electronic device determines whether an application that requests to switch a display direction exists in the plurality of applications; and if the first application in the plurality of applications needs to switch the display direction, further determines whether all the plurality of applications support the display direction requested to be switched; or if none of the plurality of applications needs to switch the display direction, ends processing.

Optionally, the electronic device may determine, in any one of the following manners, that the first application in the plurality of applications needs to switch from the first display direction to the second display direction.

Manner 1: The electronic device determines, in response to a touch control operation of a user, for example, an operation of tapping a landscape/portrait-orientated display switching control, that the first application in the plurality of applications needs to switch from the first display direction to the second display direction. For example, in response to an operation of tapping a landscape/portrait-orientated display switching control of the application 1 in the plurality of applications by the user, it is determined that the application 1 needs to switch from the first display direction to the second display direction.

Manner 2: The electronic device determines, in response to a voice operation of a user, that the first application in the plurality of applications needs to switch from the first display direction to the second display direction. For example, the electronic device determines, in response to an operation of switching the display direction of the application 1 by the user through a voice prompt, that the application 1 needs to switch from the first display direction to the second display direction.

Manner 3: The electronic device determines, in response to an operation of rotating the electronic device by the user, that the first application in the plurality of applications needs to switch from the first display direction to the second display direction.

Manner 4: The electronic device determines, based on the plurality of applications, that the first application in the plurality of applications needs to switch from the first display direction to the second display direction. For example, the electronic device determines that the first application in the plurality of applications is more suitable for landscape-orientated display. In other words, content of the application may be displayed more fully in landscape orientation. However, currently, the first application is displayed based on portrait orientation. Therefore, the electronic device determines that the first application needs to switch from portrait-orientated display to landscape-orientated display.

It should be understood that the manners in which the electronic device determines that the first application in the plurality of applications needs to switch from the first display direction to the second display direction are merely examples, and should not constitute any limitation on embodiments of this application. In another embodiment, the electronic device may alternatively determine, in another manner, that the first application in the plurality of applications needs to switch from the first display direction to the second display direction. For example, the electronic device displays, in response to an operation of tapping a split-screen layout switching control by the user, the plurality of applications on the interface based on the second display direction and a second split-screen layout, and displays in full screen the target object of the first application in the split-screen area occupied by the first application. In other words, the electronic device may switch, in response to the operation of tapping the split-screen layout switching control by the user, the display direction while switching the split-screen layout, to adapt to the split-screen layout obtained after switching.

Step 530: Display, in response to a first operation, the plurality of applications on the interface based on the second display direction and the second split-screen layout, and display in full screen the target object of the first application in the split-screen area occupied by the first application.

The target object is an object that is in a plurality of objects of the first application and that supports full-screen display, and the second split-screen layout indicates a location relationship between the plurality of applications on the interface. When all the plurality of applications support the second display direction, the electronic device displays, in response to the first operation, the plurality of applications on the interface based on the second display direction and the second split-screen layout, and displays in full screen the target object of the first application in the split-screen area occupied by the first application. In other words, when the display direction of the application on the electronic device is switched, the split-screen layout is also switched, and the target object of the first application is displayed in full screen in the split-screen area occupied by the first application. In this way, in the current split-screen layout, the plurality of applications are displayed based on the current display direction, and the target object of the first application is displayed in full screen, so that the target object of the first application can be fully displayed on the interface. This helps improve user experience.

Optionally, when a second application in the plurality of applications does not support the second display direction, the electronic device may inform, by using the interface, the user that the second application does not support the second display direction.

In some embodiments, when the display direction of the application is switched, the electronic device may perform layout adaptation. In this case, the electronic device may not need to determine whether the application supports display direction switching. In other words, the electronic device may directly perform step 530 without performing step 520.

Optionally, the first application is a video playing application, and the target object is a video playing interface of the video playing application.

The video playing application may include a plurality of objects, such as a user comment, the video playing interface, and a video title. The target object is an object that is in the plurality of objects and that supports full-screen display, for example, the video playing interface. It may be understood that the target object is an object that the user expects to fully display. For example, when the video playing interface is displayed in full screen, user experience is better.

Optionally, the first application is presentation software, and the target object is a slide show interface of the presentation software.

Optionally, the first application is a game application, and the target object is an operation interface of the game.

When the target object of the first application is displayed in full screen in the split-screen area occupied by the first application, the target object may fill the split-screen area occupied by the first application, or may not fill the split-screen area occupied by the first application. For example, when the target object is a video playing interface of a video playing application, black bars may exist in upper and lower areas of the video playing interface.

For example, before switching, the application 1 and the application 2 are on left and right split screens, and the application 1 and the application 2 are displayed in portrait orientation. After determining that the application 1 needs to switch from portrait-orientated display to landscape-orientated display, the electronic device determines whether both the application 1 and the application 2 support landscape-orientated display. When both the application 1 and the application 2 support landscape-orientated display, the application 1 and the application 2 may be displayed on the interface in a manner of top-bottom screen splitting and landscape-orientated display, and a target object of the application 1 is displayed in full screen in a split-screen area occupied by the application 1. Optionally, the electronic device may further display a target object of the application 2 in full screen in a split-screen area occupied by the application 2. The step of determining whether both the application 1 and the application 2 support landscape-orientated display may be omitted. In other words, the electronic device may perform layout adaptation, or it may be understood that both the application 1 and the application 2 support landscape-orientated display by default.

For another example, before switching, the application 1 and the application 2 are on top and bottom split screens, and the application 1 and the application 2 are displayed in landscape orientation. After determining that the application 1 needs to switch from landscape-orientated display to portrait-orientated display, the electronic device determines whether both the application 1 and the application 2 support portrait-orientated display. When both the application 1 and the application 2 support portrait-orientated display, the application 1 and the application 2 may be displayed on the interface in a manner of left-right screen splitting and portrait-orientated display, and a target object of the application 1 is displayed in full screen in a split-screen area occupied by the application 1. Optionally, the electronic device may further display a target object of the application 2 in full screen in a split-screen area occupied by the application 2. The step of determining whether both the application 1 and the application 2 support portrait-orientated display may be omitted. In other words, the electronic device may perform layout adaptation, or it may be understood that both the application 1 and the application 2 support portrait-orientated display by default.

Optionally, the second split-screen layout further indicates a ratio between the plurality of applications on the interface. The method 500 shown in FIG. 5 further includes: Determine, based on application information of the plurality of applications, the ratio between the plurality of applications on the interface.

The application information may indicate an application type, for example, a video application or a game application. Alternatively, the application information may indicate an appropriate width-height ratio of the application. Alternatively, the application information may indicate a width-height ratio of the target object of the application when the target object is displayed in full screen. For example, when the target object is a video playing interface of a video playing application, if a width-height ratio of the video playing interface is 16:9, a width-height ratio of a display area occupied by the application corresponding to the target object may also be 16:9. In this way, the electronic device may determine a proportion of the video playing application on the interface.

In a possible implementation, the ratio between the plurality of applications on the interface is selected from a plurality of predefined ratios based on the application information of the plurality of applications. For example, the plurality of predefined ratios include 1:1, 2:1, 3:1, and 4:1, and the plurality of applications include the application 1 and the application 2. The electronic device determines that a ratio between the application 1 and the application 2 on the interface is 2:1. In this ratio, viewing experience of the user is better. For another example, the plurality of applications include the application 3 and an application 4, and the electronic device determines that a ratio between the application 3 and the application 4 on the interface is 1:1. In this ratio, viewing experience of the user is better.

In another possible implementation, the electronic device determines, through calculation, a ratio between the plurality of applications on the interface based on the application information of the plurality of applications. For example, in a case in which the application 1 and the application 2 are on split screens, the electronic device determines, through calculation, that a ratio between the application 1 and the application 2 on the interface is 2:1. In a case in which the application 3 and the application 4 are on split screens, the electronic device determines, through calculation, that a ratio between the application 3 and the application 4 on the interface is 1:1.

In conclusion, it can be learned that, to improve user experience, the electronic device may determine an appropriate ratio between the plurality of applications on the current split screens on the interface, and further display the plurality of applications on the interface based on the ratio. In this way, user experience is better.

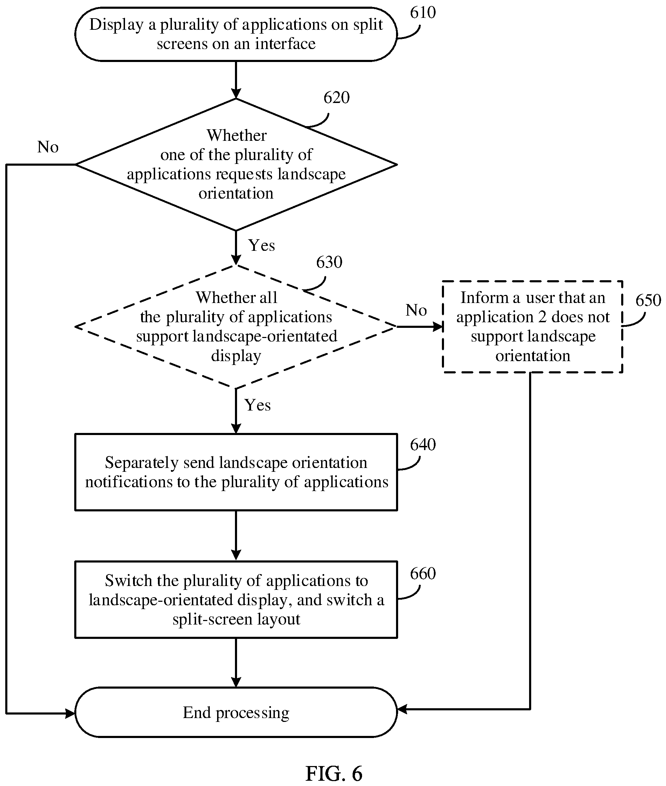

The following describes in detail the method in FIG. 5 with reference to FIG. 6 to FIG. 10(b). For example, display in a first display direction is portrait-orientated, and a first split-screen layout indicates that a plurality of applications are distributed on the left and the right of an interface; and display in a second direction is landscape-orientated, and a second split-screen layout indicates that the plurality of applications are distributed on the interface in a top-bottom manner.

FIG. 6 is a detailed flowchart of a split-screen display method according to an embodiment of this application.

Step 610: Display a plurality of applications on split screens on an interface.

For example, the plurality of applications include an application 1 and an application 2. An electronic device displays the application 1 and the application 2 on the split screens on the interface. The application 1 and the application 2 are distributed on the interface in a left-right manner, that is, in a left-right split-screen state. In addition, the application 1 and the application 2 are displayed in portrait orientation.

Step 620: Determine whether one of the applications requests landscape orientation.

The electronic device determines whether an application requesting landscape orientation exists in the plurality of applications. If an application requesting landscape orientation exists in the plurality of applications, the electronic device performs step 630. If no application requesting landscape orientation exists in the plurality of applications, the electronic device ends processing.

In a possible manner, the electronic device determines, in response to a touch control operation of a user, that the application 1 in the plurality of applications requests landscape orientation. For example, in response to an operation of tapping, by the user, a landscape/portrait-orientated display switching control of the application 1, it is determined that the application 1 requests landscape orientation.

In another possible manner, the electronic device determines, in response to a voice operation of a user, that the application 1 in the plurality of applications requests landscape orientation. For example, in response to an operation of switching the application 1 to landscape orientation through a voice prompt by the user, a folded screen determines that the application 1 requests landscape orientation.

In still another possible manner, the electronic device determines, in response to an operation of rotating the electronic device by the user, that the application 1 in the plurality of applications requests landscape orientation.

In yet another possible manner, the electronic device determines that there is a better effect if the application 1 in the plurality of applications is displayed in landscape orientation. In this case, the electronic device determines that the application 1 requests landscape orientation.

Step 630: Determine whether all the plurality of applications support landscape-orientated display.

After determining that an application requesting landscape orientation exists in the plurality of applications, the electronic device determines whether all the plurality of applications support landscape-orientated display. If all the plurality of applications support landscape-orientated display, step 640 is performed. If not all the plurality of applications support landscape-orientated display, step 650 is performed.

Step 640: Separately send landscape orientation notifications to the plurality of applications.

When determining that all the plurality of applications support landscape-orientated display, the electronic device separately sends the landscape orientation notifications to the plurality of applications, so that the plurality of applications separately adjust a layout of content of the plurality of applications.

Step 650: Inform the user that the application 2 does not support landscape orientation.

When determining that the application 2 in the plurality of applications does not support landscape-orientated display, the electronic device informs, by using the interface, the user that the application 2 does not support landscape-orientated display.

Step 660: Switch the plurality of applications to landscape-orientated display, and switch the split-screen layout.

The electronic device displays the plurality of applications on the interface in a manner of landscape-orientated display and top-bottom screen splitting, and displays a target object of the application 1 in full screen in a split-screen area occupied by the application 1.

It should be understood that, in embodiments of this application, an example in which during landscape-orientated display, the plurality of applications are in a top-bottom split-screen state and user experience is better is used. However, this should not constitute any limitation on embodiments of this application. For example, in another embodiment, during landscape-orientated display, the plurality of applications may be in a left-right split-screen state, and user experience is better.

It should be further understood that, in some embodiments, when a display direction of the application is switched, the electronic device may perform layout adaptation. In this case, the electronic device may not need to determine whether the application supports display direction switching. In other words, the electronic device may directly perform step 640 without performing step 630.

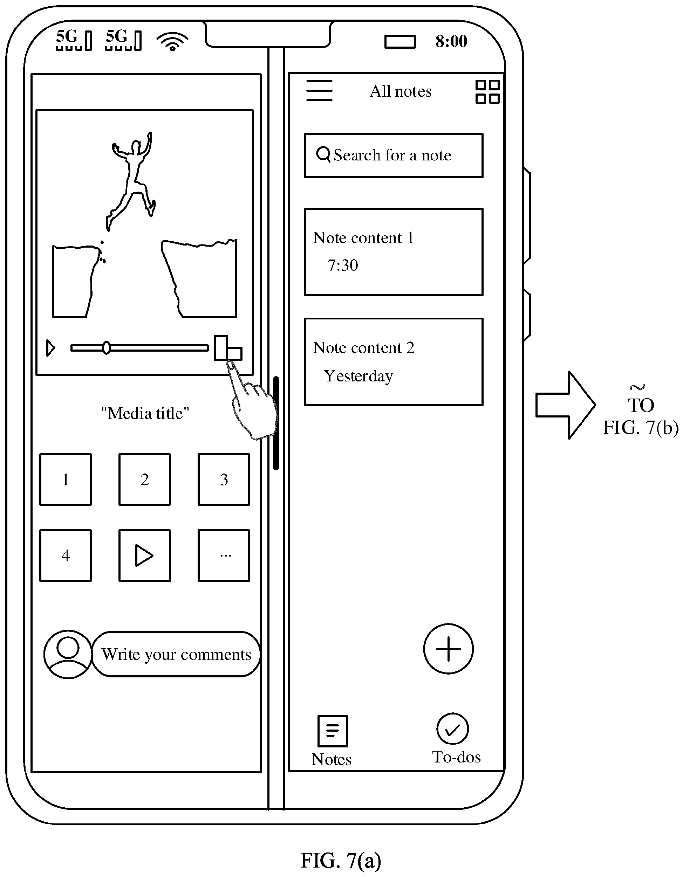

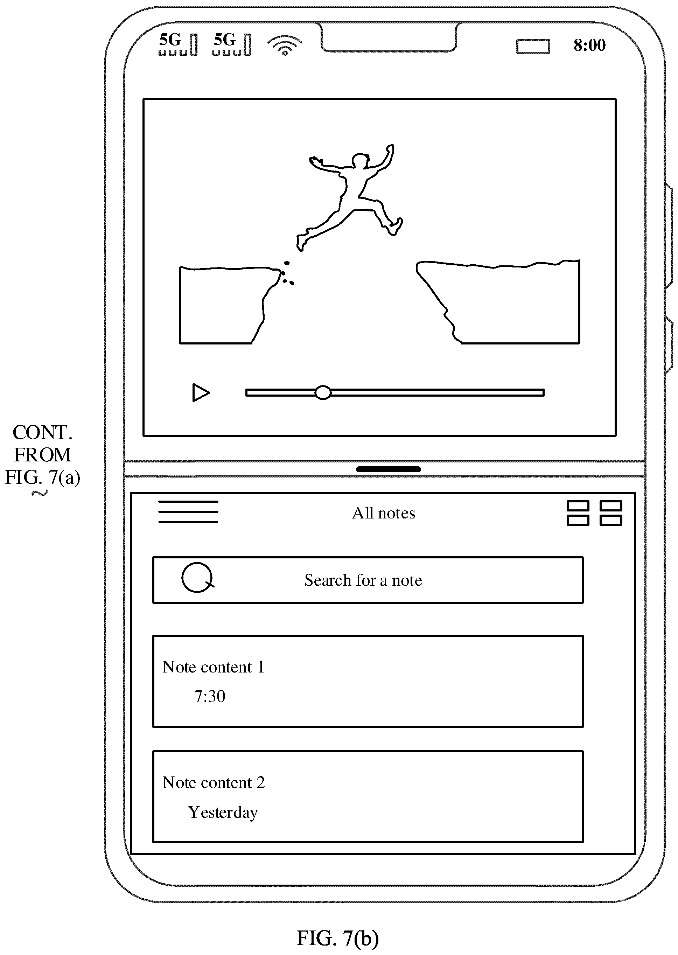

FIG. 7(a) and FIG. 7(b) are a diagram of a method for triggering an electronic device to switch a display direction according to an embodiment of this application.

As shown in FIG. 7(a), a plurality of applications are displayed on an interface of the electronic device, and the plurality of applications include a video playing application and a notepad. The video playing application and the notepad are displayed on left and right split screens, and the video playing application and the notepad are displayed in portrait orientation. In response to an operation of tapping a landscape/portrait-orientated display switching control of the video playing application by a user, the electronic device displays the video playing application and the notepad on the interface in a manner of landscape orientation and top-bottom screen splitting (as shown in FIG. 7(b)). It can be learned that a target object of the video playing application is displayed in full screen in a split-screen area in which the video playing application is located. In other words, a video playing interface of the video playing application is displayed in full screen in the split-screen area in which the video playing application is located. In this way, key content of the video playing application is fully displayed, and user experience is better.

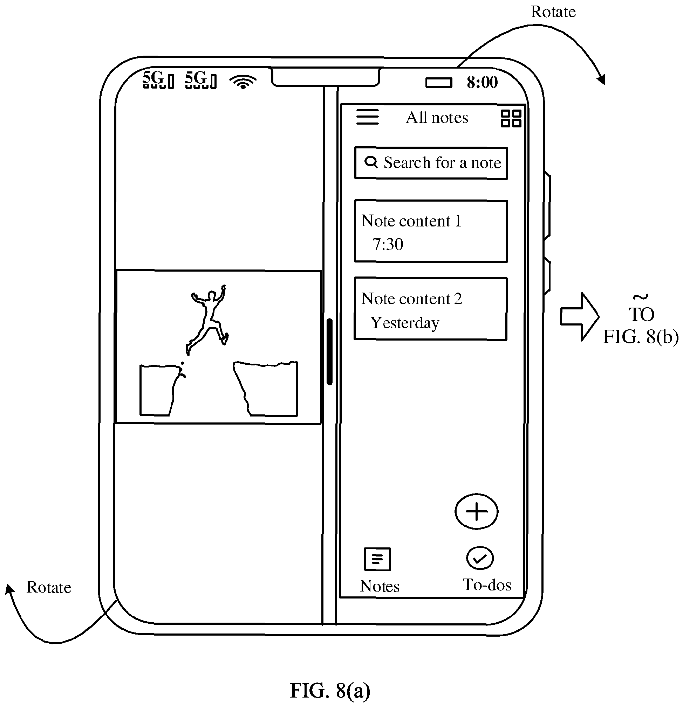

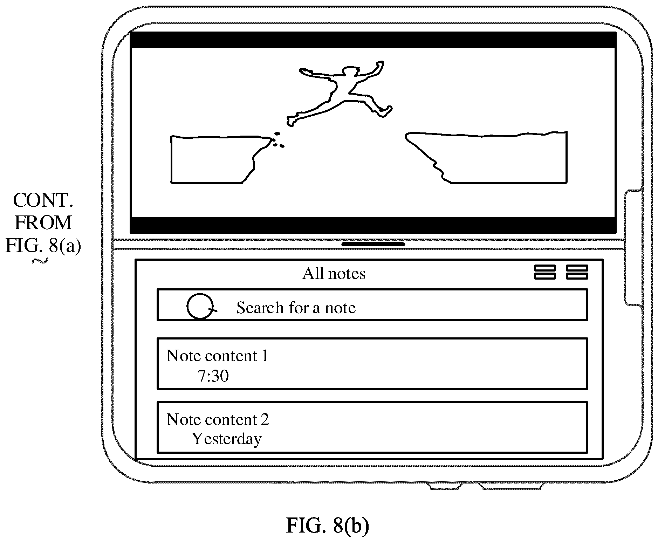

FIG. 8(a) and FIG. 8(b) are a diagram of another method for triggering an electronic device to switch a display direction according to an embodiment of this application.

As shown in FIG. 8(a), a plurality of applications are displayed on an interface of the electronic device, and the plurality of applications include a video playing application and a notepad. The video playing application and the notepad are displayed in left and right split screens, and the video playing application and the notepad are displayed in portrait orientation. In response to an operation of rotating the electronic device by a user, the electronic device displays the video playing application and the notepad on an interface in a manner of landscape orientation and top-bottom screen splitting (as shown in FIG. 8(b)). It can be learned that a target object of the video playing application is displayed in full screen in a split-screen area in which the video playing application is located. In other words, a video playing interface of the video playing application is displayed in full screen in the split-screen area in which the video playing application is located. In this way, key content of the video playing application is fully displayed, and user experience is better.

It should be noted that the figure shows only an example of the video playing interface, but should not constitute any limitation on embodiments of this application. During actual application, after landscape/portrait orientation switching is performed on the video playing interface, a width-height ratio of the video playing interface may remain unchanged.

It can be learned from FIG. 8(b) that, when the video playing application plays a video in full screen, because a ratio of the video playing interface is not completely the same as a width-height ratio of the split-screen area in which the video playing interface is located, black bars may still exist at upper and lower parts of the split-screen area in which the video playing interface is located. In this case, user experience may be poor.

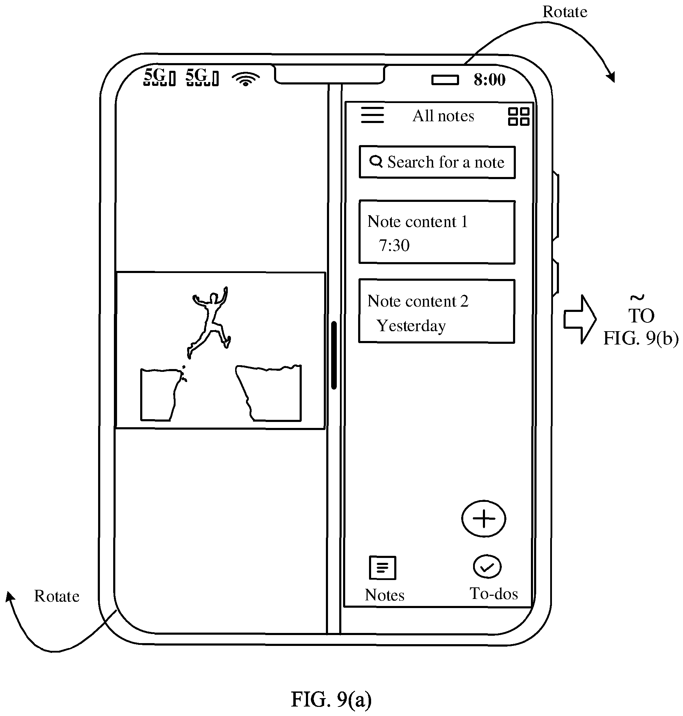

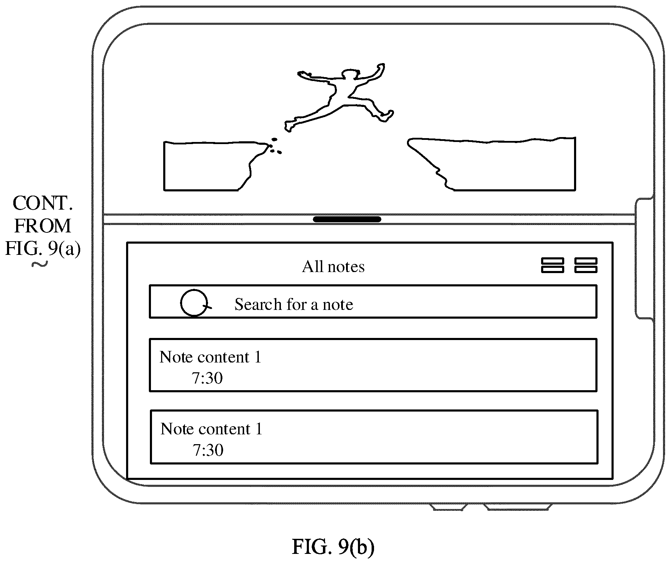

Therefore, the electronic device may adjust a ratio between the video playing application and the notepad on the interface, so that no black bar exists when the video playing application plays the video, thereby improving viewing experience of the user. As shown in FIG. 9(a), a video playing application and a notepad are displayed on an interface of an electronic device. The video playing application and the notepad are displayed on left and right split screens, and the video playing application and the notepad are displayed in portrait orientation. A video playing interface may be displayed in full screen (as shown in FIG. 9(a)), or may be displayed not in full screen (as shown in FIG. 7(a)). This is not limited in embodiments of this application. In response to an operation of rotating the electronic device by a user, when determining that both the video playing application and the notepad support landscape orientation, the electronic device adjusts a ratio between the video playing application and the notepad on the interface, for example, adjusts the ratio to 1:2, and displays the video playing application and the notepad on the interface in a manner of landscape orientation and top-bottom screen splitting (as shown in FIG. 9(b)). It can be learned that the video playing interface of the video playing application is displayed in full screen in a split-screen area in which the video playing interface is located, and no black bar exists. In this way, the video playing application can ensure that the video playing interface is fully displayed, and can save more display space to display another split-screen application interface. This improves display efficiency and user experience.

Optionally, in the embodiments shown in FIG. 7(a) to FIG. 9(b), the plurality of applications displayed by the electronic device may all include a target object that supports full-screen display. For example, the plurality of applications include the video playing application and a game application. Further, when the electronic device displays the video playing application and the game application on the interface in the manner of landscape orientation and top-bottom screen splitting, the video playing interface of the video playing application and an operation interface of the game application may be respectively displayed in full screen in split-screen areas in which the video playing interface and the game application are located.

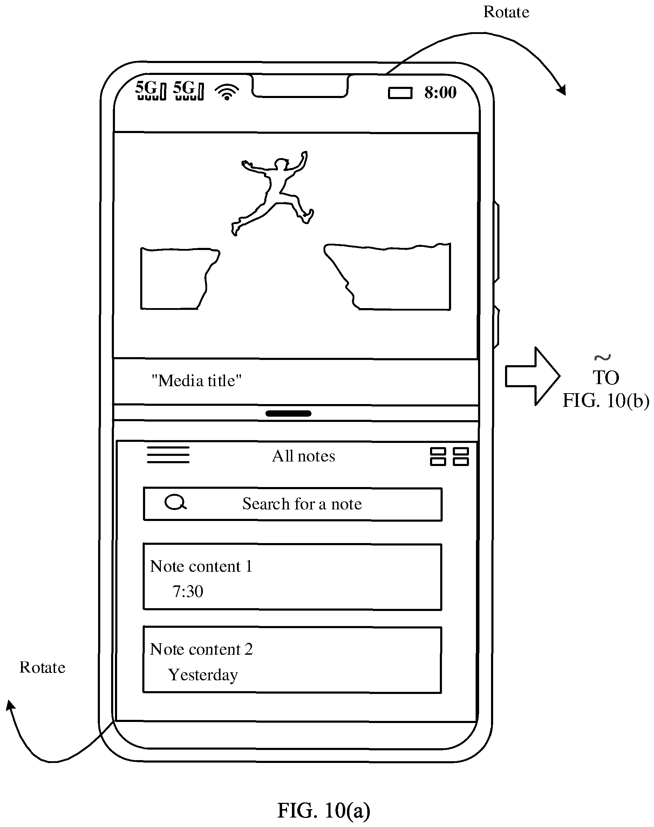

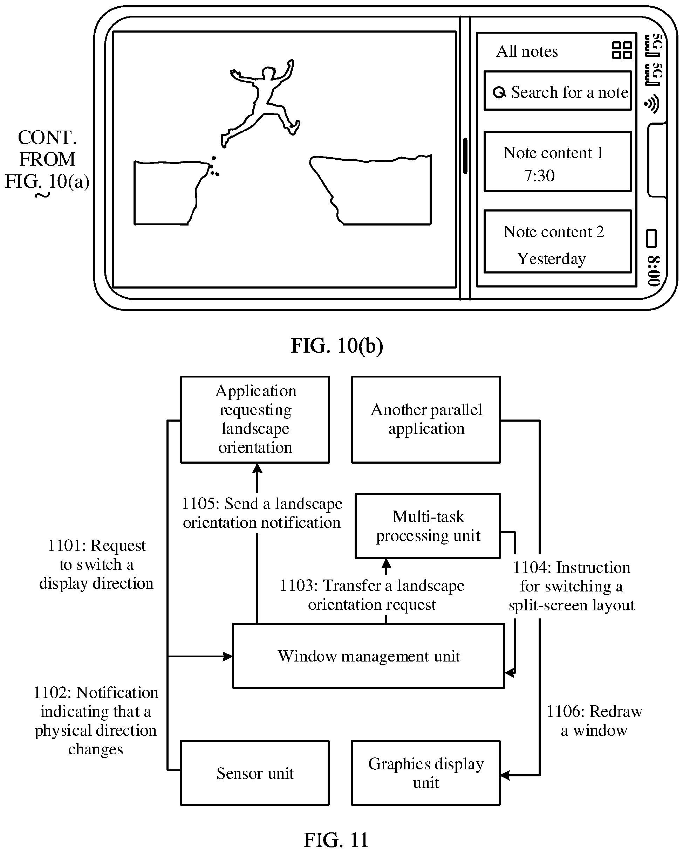

FIG. 10(a) and FIG. 10(b) are a diagram of switching a display direction of an electronic device according to an embodiment of this application.

As shown in FIG. 10(a), a plurality of applications are displayed on an interface of the electronic device, and the plurality of applications include a video playing application and a notepad. The video playing application and the notepad are displayed on top and bottom split screens. A video playing interface of the video playing application may be displayed in full screen, or may be displayed not in full screen. In response to an operation of rotating the electronic device by a user, the electronic device may adjust, based on a type of the application, a ratio between the video playing application and the notepad on the interface. For example, the video playing application is more suitable for landscape-orientated display. In this case, the electronic device may adjust a display ratio between the video playing application and the notepad to 2:1. The video playing application is displayed in a manner of landscape orientation, the notepad is displayed in a manner of portrait orientation, and the video playing application and the notepad are displayed on left and right split screens (as shown in FIG. 10(b)). It can be learned that the video playing interface of the video playing application is displayed in full screen in a split-screen area in which the video playing interface is located. In this way, content of the video playing application is fully displayed, and user experience is better.

FIG. 11 is a schematic flowchart of internal interaction of an electronic device according to an embodiment of this application. In the method shown in FIG. 11, an example in which the electronic device currently displays a plurality of applications in a manner of portrait orientation and left-right screen splitting is used. In addition, FIG. 11 is described by using an Android operating system as an example. However, this should not constitute any limitation on embodiments of this application.

Step 1101: An application requesting landscape orientation sends, to a window management unit, a request for requesting to switch a display direction.

The application requesting landscape orientation is an application that is in the plurality of applications and that requests landscape orientation, and the plurality of applications further include another application displayed on a split screen. For example, the plurality of applications may include an application 1 and an application 2.

For example, in response to an operation of tapping a landscape/portrait-orientated display switching control of the application 1 by a user, the application 1 sends, to the window management unit, the request for requesting to switch the display direction.

Step 1102: A sensor unit sends, to the window management unit, a notification indicating that a physical direction changes.

For example, in response to an operation of rotating the electronic device by the user, the sensor unit determines that a physical direction of the electronic device changes, and therefore sends, to the window management unit, the notification indicating that the physical direction changes.

It should be understood that step 1101 and step 1102 are two manners of triggering display direction switching. In other words, the electronic device only needs to perform one of the steps. For example, the electronic device performs step 1102, and the sensor unit in the electronic device senses that the physical direction of the electronic device changes and sends, to the window management unit, the notification indicating that the physical direction changes, to trigger the window management unit to send the landscape orientation request to a multi-task processing unit.

Step 1103: The window management unit transfers the landscape orientation request to the multi-task processing unit.

Correspondingly, the multi-task processing unit receives the landscape orientation request from the window management unit. After receiving the landscape orientation request, the multi-task processing unit determines whether all the plurality of applications support landscape orientation. If all the plurality of applications support landscape orientation, step 1104 is performed. If an application that does not support landscape orientation exists in the plurality of applications, processing ends.

Step 1104: The multi-task processing unit sends, to the window management unit, an instruction for switching a split-screen layout.

Correspondingly, the window management unit receives, from the multi-task processing unit, the instruction for switching the split-screen layout. After receiving the instruction of the multi-task processing unit, the window management unit may adjust a size of a window occupied by each application, a ratio, a window location, and the like.

Step 1105: The window management unit sends a landscape orientation notification.

After adjusting the size of a window occupied by each application, the ratio, and the window location, the window management unit sends the landscape orientation notification to each application in the plurality of applications, so that each application adjusts a layout of content of the application.

Step 1106: Each application indicates a graphics display unit to redraw the window.

After adjusting the layout of content of each application, each application indicates the graphics display unit to redraw the window and render the interface, to display the plurality of applications on the interface. For example, the electronic device displays the plurality of applications on the screen in a manner of landscape orientation and top-bottom screen splitting, and displays in full screen a target object of the application 1 in a split-screen area in which the application 1 is located. Optionally, the electronic device may further display in full screen, in a split-screen area in which the application 2 is located, a target object of the application 2 that is displayed on split screens with the application 1.

Based on the foregoing technical solution, when a first application that is in the plurality of applications and that is in a split-screen state needs to switch from a first display direction to a second display direction, when switching a display direction, the electronic device also switches a split-screen layout from a first split-screen layout to a second split-screen layout, and displays the target object of the first application in full screen in the split-screen area occupied by the first application. In this way, the electronic device fully displays the target object of the first application in a current split-screen layout, that is, fully displays key content of the first application. This helps improve user experience.

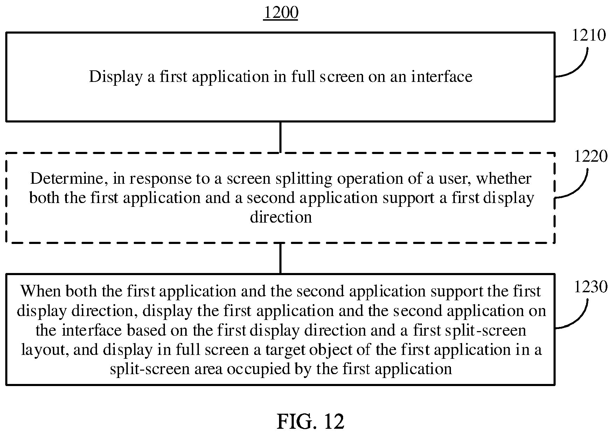

FIG. 12 is a schematic flowchart of a split-screen display method 1200 according to an embodiment of this application. The method 1200 shown in FIG. 12 may include steps 1210 to 1230. The following describes the steps in the method 1200 in detail.

Step 1210: Display a first application on an interface in full screen.

For example, an electronic device is used as an example. The electronic device may display an application 1 on the interface in full screen in a manner of landscape orientation or portrait orientation. In other words, the electronic device is currently not in a split-screen state.

Step 1220: Determine, in response to a screen splitting operation of a user, whether both the first application and a second application support a first display direction.

For example, the first display direction may be landscape-orientated display. In response to the screen splitting operation of the user, the electronic device determines whether both the application 1 and an application 2 support landscape-orientated display. If both the application 1 and the application 2 support landscape-orientated display, the electronic device may display the application 1 and the application 2 in a manner of landscape orientation and top-bottom screen splitting. If an application that does not support landscape orientation exists in the application 1 and the application 2, the electronic device may display the application 1 and the application 2 in a manner of portrait orientation and left-right screen splitting.

The first display direction may be a display direction adapted to the first application. In other words, when the first application is displayed in the first display direction, a viewing effect of the user is better. It may be understood that, in some other embodiments, the first display direction may alternatively be portrait-orientated display. This is not limited in this application.

It should be understood that an operation of triggering screen splitting (that is, enabling screen splitting) is not limited in embodiments of this application.

Step 1230: When both the first application and the second application support the first display direction, display the first application and the second application on the interface based on the first display direction and a first split-screen layout.

The first split-screen layout indicates a location relationship between the first application and the second application on the interface.

When both the first application and the second application support the first display direction, the electronic device displays the plurality of applications on the interface based on the first display direction and the first split-screen layout. The first split-screen layout matches the first display direction. In other words, when enabling screen splitting, the electronic device automatically enters a split-screen layout matching the display direction, to improve user experience. That the display direction matches the split-screen layout means that the electronic device displays the plurality of applications in the display direction and the split-screen layout. In this way, user experience is better. In addition, a target object of the first application is displayed in full screen in a split-screen area occupied by the first application, so that the target object of the first application is fully displayed. This helps improve user experience.

It should be understood that, in some embodiments, when a display direction of the application is switched, the electronic device may perform layout adaptation. In this case, the electronic device may not need to determine whether the application supports display direction switching. In other words, the electronic device may directly perform step 1230 without performing step 1220. To be specific, the electronic device displays, in response to the screen splitting operation of the user, the first application and the second application on the interface based on a first display direction and the first split-screen layout, and displays in full screen the target object of the first application in the split-screen area occupied by the first application.

Optionally, the first application is a video playing application, and the target object may be a video playing interface of the video playing application.

The video playing application may include the plurality of objects, such as a user comment, the video playing interface, and a video title. The target object is an object that is in a plurality of objects and that supports full-screen display, for example, the video playing interface. It may be understood that the target object is an object that the user expects to fully display. For example, when the video playing interface is displayed in full screen, user experience is better.

Optionally, the first application is presentation software, and the target object may be a slide show interface of the presentation software.

Optionally, the first application may be a game application, and the target object is an operation interface of the game.

Optionally, the first split-screen layout further indicates a ratio between the first application and the second application on the interface. The method 1200 shown in FIG. 12 further includes: determining, based on application information of the first application and application information of the second application, the ratio between the first application and the second application on the interface.

The application information may indicate an application type, for example, a video application or a game application. Alternatively, the application information may indicate an appropriate width-height ratio of the application. Alternatively, the application information may indicate a width-height ratio of the target object of the application when the target object is displayed in full screen. For example, when the target object is a video playing interface of a video playing application, if a width-height ratio of the video playing interface is 16:9, a width-height ratio of a display area occupied by the application corresponding to the target object may also be 16:9. In this way, the electronic device may determine a proportion of the video playing application on the interface.

It can be learned that, to improve user experience, the electronic device may determine an appropriate ratio between the plurality of applications on the current split screens on the interface, and further display the plurality of applications on the interface based on the ratio. In this way, user experience is better.

For example, the electronic device calculates, based on a plurality of applications that are currently in the split-screen state, a ratio between the plurality of applications on the interface. For example, in a case in which the application 1 and the application 2 are on split screens, the electronic device determines, through calculation, that a ratio between the application 1 and the application 2 on the interface is 2:1. In a case in which an application 3 and an application 4 are on split screens, the electronic device determines, through calculation, that a ratio between the application 3 and the application 4 on the interface is 1:1. In this ratio, key content of an application may fill a split-screen area in which the application is located, and user experience is better.

For more specific descriptions of determining, based on the plurality of applications, the ratio between the plurality of applications on the interface, refer to the related descriptions of the method in FIG. 5. Details are not described herein again.

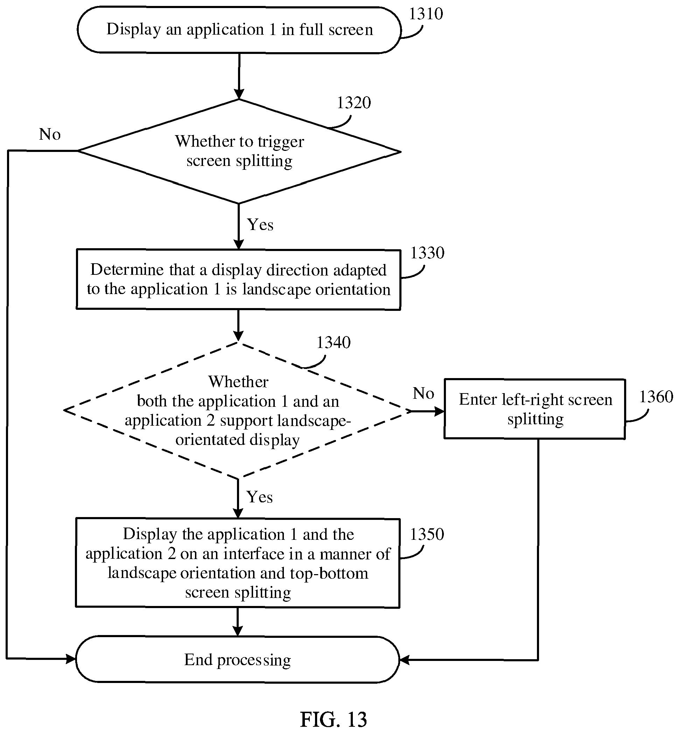

The following describes in detail the method in FIG. 12 with reference to FIG. 13 and

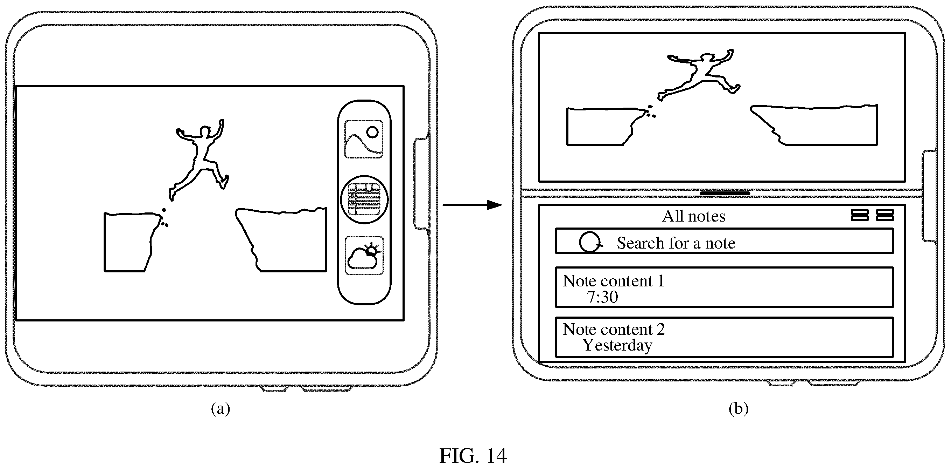

FIG. 14. In FIG. 13 and FIG. 14, an example in which a first display direction is landscape orientation, and a first split-screen layout indicates that a plurality of applications are distributed on an interface in a top-bottom manner is used.

FIG. 13 is a detailed flowchart of still another split-screen display method according to an embodiment of this application.

Step 1310: Display an application 1 in full screen.

An electronic device is currently not in a split-screen state, and the electronic device displays the application 1 on the interface in full screen. The application 1 may be displayed in landscape orientation, or may be displayed in portrait orientation. This is not limited in this application.

Step 1320: Determine whether to trigger screen splitting.

The electronic device determines whether to trigger screen splitting. In response to a screen splitting triggering operation by a user, the electronic device determines to enable screen splitting, and performs step 1330. If screen splitting is not triggered, the electronic device ends processing.

Step 1330: Determine that a display direction adapted to the application 1 is landscape orientation.

When screen splitting is triggered, the electronic device determines the display direction adapted to the application 1, namely, a display direction in which content of the application 1 may be fully displayed. If it is determined that the display direction adapted to the application 1 is landscape orientation, step 1340 is performed. If it is determined that the display direction adapted to the application 1 is portrait orientation, the application 1 and an application 2 may be displayed in a manner of portrait orientation and left-right screen splitting.

Step 1340: Determine whether both the application 1 and the application 2 support landscape-orientated display.

When screen splitting is triggered, a folded screen determines whether both the application 1 and the application 2 support landscape-orientated display. If both the application 1 and the application 2 support landscape-orientated display, step 1350 is performed. If an application that does not support landscape-orientated display exists in the application 1 and the application 2, step 1360 is performed.

Step 1350: Display the application 1 and the application 2 on the interface in a manner of landscape orientation and top-bottom screen splitting.

When both the application 1 and the application 2 support application of landscape-orientation display, the electronic device displays the application 1 and the application 2 on the interface in a manner of landscape orientation and top-bottom screen splitting.

In some embodiments, the electronic device may perform layout adaptation, or it may be understood that all applications may be displayed in landscape orientation in the electronic device. In this case, the electronic device may directly perform step S1350 without performing step S1340.

Step 1360: Enter left-right screen splitting.

When an application that does not support landscape-orientated display exists in the application 1 and the application 2, the electronic device may display the application 1 and the application 2 on the interface in the manner of portrait orientation and left-right screen splitting.

FIG. 14 is a diagram of a method for triggering screen splitting of an electronic device according to an embodiment of this application.

As shown in (a) in FIG. 14, an electronic device currently plays a video in full screen on an interface. An initial display status of a video playing application is not limited in this application. For example, a video playing interface may be displayed in full screen in landscape orientation (as shown in (a) in FIG. 14), or may be displayed not in full screen in portrait orientation (as shown in FIG. 7(a)). For another example, the video playing interface may be displayed in full screen in portrait orientation, or may be displayed not in full screen in landscape orientation. In response to an operation of sliding the interface to the left by a user, an application that may be selected by the user and that can be displayed with the video on split screens is displayed, for example, a notepad, a gallery, or weather. The notepad is used as an example. The electronic device further determines a display direction adapted to the video playing application. When it is determined that the display direction adapted to the video playing application is landscape orientation, the video playing application is more suitable for video playing in landscape orientation. Optionally, the electronic device may further determine whether both the video playing application and the notepad support landscape orientation. If both the video playing application and the notepad support landscape orientation, the electronic device displays the video and the notepad on the interface in a manner of landscape orientation and top-bottom screen splitting (as shown in (b) in FIG. 14). In addition, the video playing interface of the video playing application is displayed in full screen in a split-screen area occupied by the video playing application. It can be learned that the video playing interface is displayed in full screen in the split-screen area in which the video playing application is located, the video is fully displayed, and user experience is better.

Based on the foregoing technical solution, the electronic device may automatically determine a split-screen layout based on a display direction suitable for a first application. For example, the video playing application is more suitable for video playing in landscape orientation. Therefore, when screen splitting is triggered, the electronic device may trigger top-bottom screen splitting by default. In other words, when the electronic device displays the first application in full screen on the interface, once screen splitting is triggered, the electronic device may display, by default, the first application and a second application in a first display direction and a first split-screen layout, and displays in full screen a target object of the first application in a split-screen area occupied by the first application. In this way, the target object of the first application is fully displayed. In other words, key content of the first application is fully displayed, so that user experience is better.

Optionally, when the second application also includes a target object suitable for full-screen display, in the embodiment shown in FIG. 14, when the electronic device displays the first application and the second application in the first display direction and the first split-screen layout, the target object of the first application may be displayed in full screen in the split-screen area occupied by the first application. Similarly, the target object of the second application may also be displayed in full screen in a target area occupied by the second application. This helps improve display efficiency and user experience.

In the foregoing embodiment, an example in which the target object of the first application (for example, the application 1) may be fully displayed in landscape orientation in the split-screen area occupied by the application is used for description. In some other embodiments, the target object of the first application may be displayed more fully in portrait orientation in the split-screen area occupied by the application. Further, after adjustment, the electronic device may display a plurality of applications (for example, the application 1 and an application 2) on the interface in a manner of portrait orientation and left-right screen splitting, and display in full screen a target object of the application 1 in a display area of the application 1. For a specific adjustment manner and process, refer to the related descriptions in the foregoing embodiment. This is not limited in this application.

An embodiment of this application further provides an electronic device. The electronic device may be, for example, the electronic device shown in FIG. 1, and includes a corresponding unit configured to perform the steps performed by the electronic device in the foregoing method embodiments. The unit included in the electronic device may be implemented by software and/or hardware.

An embodiment of this application further provides an electronic device. The electronic device may be, for example, the electronic device shown in FIG. 1. A memory in the electronic device is configured to store a computer program. A processor in the electronic device is configured to invoke and execute the computer program, so that the electronic device is enabled to perform the method in FIG. 5, FIG. 6, FIG. 11, FIG. 12, or FIG. 13.

This application further provides a chip system. The chip system includes at least one processor, configured to implement the method in FIG. 5, FIG. 6, FIG. 11, FIG. 12, or FIG. 13, for example, receive or process data and/or information in the method.

In a possible design, the chip system further includes a memory, the memory is configured to store program instructions and data, and the memory is located inside or outside the processor.

The chip system may include a chip, or may include a chip and another discrete component.

This application further provides a computer program product. The computer program product includes a computer program (which may also be referred to as code or instructions). When the computer program is run, an electronic device is enabled to implement the method in FIG. 5, FIG. 6, FIG. 11, FIG. 12, or FIG. 13.

This application further provides a computer-readable storage medium. The computer-readable storage medium stores a computer program (which may also be referred to as code or instructions). When the computer program is run, an electronic device is enabled to implement the method in FIG. 5, FIG. 6, FIG. 11, FIG. 12, or FIG. 13.

It should be understood that the steps in the foregoing methods may be completed by using a hardware integrated logic circuit or instructions in a form of software in a processor. The steps of the methods disclosed with reference to embodiments of this application may be directly performed and completed by a hardware processor, or may be performed and completed by using a combination of hardware in a processor and a software module. The software module may be located in a mature storage medium in the art, for example, a random-access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be further understood that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, for example, a random-access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random-access memory, RAM), used as an external cache. By way of example, and not limitation, many forms of RAMs may be used, for example, a static random-access memory (static RAM, SRAM), a dynamic random-access memory (dynamic RAM, DRAM), a synchronous dynamic random-access memory (synchronous DRAM, SDRAM), a double data rate synchronous dynamic random-access memory (double data rate SDRAM, DDR SDRAM), an enhanced synchronous dynamic random-access memory (enhanced SDRAM, ESDRAM), a synchronous link dynamic random-access memory (synchlink DRAM, SLDRAM), and a direct rambus dynamic random-access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

In the foregoing embodiments, all or some of the functions of the function units may be implemented by using software, hardware, firmware, or any combination thereof. When software is used to implement the embodiments, all or a part of the embodiments may be implemented in a form of computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), or a semiconductor medium (for example, a solid-state disk (solid-state disk, SSD)).

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A split-screen display method, applied to an electronic device, wherein the method comprises:
displaying a plurality of applications on an interface based on a first display direction and a first split-screen layout, wherein the first split-screen layout indicates a location relationship between the plurality of applications on the interface, and the plurality of applications comprise a first application; and
displaying, in response to a first operation, the plurality of applications on the interface based on a second display direction and a second split-screen layout, and displaying in full screen a target object of the first application in a split-screen area occupied by the first application, wherein the target object is an object that is in a plurality of objects of the first application and that supports full-screen display, and the second split-screen layout indicates a location relationship between the plurality of applications on the interface.

2. The method according to claim 1, wherein the method further comprises:
determining whether all the plurality of applications support the second display direction; and
the displaying, in response to a first operation, the plurality of applications on the interface based on a second display direction and a second split-screen layout, and displaying in full screen a target object of the first application in a split-screen area occupied by the first application comprises:
when all the plurality of applications support the second display direction, displaying, in response to the first operation, the plurality of applications on the interface based on the second display direction and the second split-screen layout, and displaying in full screen the target object of the first application in the split-screen area occupied by the first application.

3. The method according to claim 2, wherein the method further comprises:
when a second application in the plurality of applications does not support the second display direction, informing, by using the interface, a user that the second application does not support the second display direction.

4. The method according to any one of claims 1 to 3, wherein the first operation comprises any one of the following: an operation of tapping a landscape/portrait-orientated display switching control, an operation of tapping a split-screen layout switching control, a voice operation, or an operation of rotating the electronic device.

5. The method according to any one of claims 1 to 4, wherein the first display direction is portrait-orientated display, and the first split-screen layout indicates that the plurality of applications are distributed on the interface in a left-right manner; and the second display direction is landscape-orientated display, and the second split-screen layout indicates that the plurality of applications are distributed on the interface in a top-bottom manner.

6. The method according to any one of claims 1 to 4, wherein the first display direction is landscape-orientated display, and the first split-screen layout indicates that the plurality of applications are distributed on the interface in a top-bottom manner; and the second display direction is portrait-orientated display, and the second split-screen layout indicates that the plurality of applications are distributed on the interface in a left-right manner.

7. The method according to any one of claims 1 to 6, wherein the first application is a video playing application, and the target object is a video playing interface of the video playing application.

8. The method according to any one of claims 1 to 7, wherein the second split-screen layout further indicates a ratio between the plurality of applications on the interface, and the method further comprises:
determining, based on application information of the first application, the ratio between the plurality of applications on the interface.

9. A split-screen display method, applied to an electronic device, wherein the method comprises:
displaying a first application in full screen on an interface; and
displaying, in response to a screen splitting operation of a user, the first application and a second application on the interface based on a first display direction and a first split-screen layout, and displaying in full screen a target object of the first application in a split-screen area occupied by the first application, wherein the target object is an object that is in a plurality of objects of the first application and that supports full-screen display, and the first split-screen layout indicates a location relationship between the first application and the second application on the interface.

10. The method according to claim 9, wherein the method further comprises:
determining whether both the first application and the second application support the first display direction; and
the displaying, in response to a screen splitting operation of a user, the first application and a second application on the interface based on a first display direction and a first split-screen layout, and displaying in full screen a target object of the first application in a split-screen area occupied by the first application comprises:
when both the first application and the second application support the first display direction, displaying, in response to the screen splitting operation of the user, the first application and the second application on the interface based on the first display direction and the first split-screen layout, and displaying in full screen the target object of the first application in the split-screen area occupied by the first application.

11. The method according to claim 9 or 10, wherein the first display direction is landscape-orientated display, and the first split-screen layout indicates that the first application and the second application are distributed on the interface in a top-bottom manner.

12. The method according to claim 9 or 10, wherein the first display direction is portrait-orientated display, and the first split-screen layout indicates that the first application and the second application are distributed on the interface in a left-right manner.

13. The method according to any one of claims 9 to 12, wherein the first application is a video playing application, and the target object is a video playing interface of the video playing application.

14. The method according to any one of claims 9 to 13, wherein the first split-screen layout further indicates a ratio between the first application and the second application on the interface, and the method further comprises:
determining, based on application information of the first application and/or application information of the second application, the ratio between the first application and the second application on the interface.

15. An electronic device, comprising a unit configured to implement the method according to any one of claims 1 to 14.

16. An electronic device, comprising a processor and a memory, wherein
the memory is configured to store a computer program; and
the processor is configured to invoke the computer program, so that the electronic device is enabled to perform the method according to any one of claims 1 to 14.

17. A computer-readable storage medium, wherein the storage medium stores a computer program or instructions, and when the computer program or the instructions are executed by a computer, the method according to any one of claims 1 to 14 is implemented.

18. A computer program product, wherein the computer program product comprises instructions, and when the instructions are run by a computer, the method according to any one of claims 1 to 14 is implemented.

19. A program product, wherein the program product comprises a computer program, the computer program is stored in a readable storage medium, at least one processor of a communication apparatus may read the computer program from the readable storage medium, and the at least one processor executes the computer program, so that the communication apparatus is enabled to perform the method according to any one of claims 1 to 8 or the method according to any one of claims 9 to 14.
